# EUROPÄISCHE PATENTANMELDUNG

(11) **EP 0 736 546 A2**
(43) Veröffentlichungstag der Anmeldung: **09.10.1996**
(21) Anmeldenummer: 96104861.8
(22) Anmeldetag: 27.03.1996
(51) Int. Cl.: C08F 2/22

(54) **Wässrige Polymerisatdispersion**

(30) Priorität: 06.04.1995 DE 19512883
(71) Anmelder: BASF AKTIENGESELLSCHAFT, 67056 Ludwigshafen (DE)
(72) Erfinder: Schade, Christian, Dr., 67061 Ludwigshafen (DE)

(57) **Zusammenfassung**

Wäßrige Polymerisatdispersionen, die man dadurch erhält, daß man ein keine tensidischen Monomere umfassendes Gemisch aus hydrophoben und hydrophilen ethylenisch ungesättigten Monomeren nach der Methode der radikalischen wäßrigen Emulsionspolymerisation polymerisiert und als Dispergiermedium ein Gemisch aus Wasser und einem in Wasser nicht vollständig löslichen organischen Lösungsmittel verwendet.

## Beschreibung

Vorliegende Erfindung betrifft wäßrige Polymerisatdispersionen, die dadurch erhältlich sind, daß man ein Gemisch aus wenigstens eine ethylenisch ungesättigte Gruppe aufweisenden radikalisch polymerisierbaren Monomeren nach der Methode der radikalischen wäßrigen Emulsionspolymerisation mit der Maßgabe polymerisiert, daß
a) das Monomerengemisch zu 30 bis 90 Gew.-%, bezogen auf das Gemisch, aus Monomeren besteht, deren Löslichkeit in Wasser bei der gewählten Polymerisationstemperatur und dem gewählten Polymerisationsdruck ≧ 5 Gew.-%, bezogen auf die Wassermenge, beträgt (Monomere a),
b) das Monomerengemisch zu 10 bis 70 Gew.-%, bezogen auf das Gemisch, aus Monomeren besteht, deren Löslichkeit in Wasser bei der gewählten Polymerisationstemperatur und dem gewählten Polymerisationsdruck < 5 Gew.-%, bezogen auf die Wassermenge, beträgt (Monomere b)
c) das Monomerengemisch keine tensidischen Monomeren umfaßt (Monomere c) und
d) wenigstens ein Teil der radikalischen wäßrigen Emulsionspolymerisation in einem Dispergiermedium erfolgt, das neben Wasser aus einem organischen Lösungsmittel besteht, dessen Löslichkeit in Wasser bei der gewählten Polymerisationstemperatur und dem gewählten Polymerisationsdruck, bezogen auf die Wassermenge, ≦ 10 Gew.-% beträgt, wobei die Menge des organischen Lösungsmittels so bemessen ist, daß es einerseits das zweifache der Wassermasse nicht übersteigt, andererseits jedoch ausreicht, um neben der wäßrigen Phase die Ausbildung einer Lösungsmittelphase zu bewirken.

Ferner betrifft vorliegende Erfindung Verfahren zur Herstellung solcher wäßriger Polymerisatdispersionen und deren Verwendung als Verdicker oder Bindemittel.

Wäßrige Polymerisatdispersionen sind fluide Systeme, die als disperse Phase in wäßrigem Dispergiermedium Polymerisatteilchen in stabiler disperser Verteilung befindlich enthalten. Der Durchmesser der Polymerisatteilchen liegt im allgemeinen hauptsächlich im Bereich von 0,01 bis 5 µm, häufig hauptsächlich im Bereich von 0,01 bis 1 µm. Die Stabilität der dispersen Verteilung erstreckt sich oft über einen Zeitraum von ≧ 1 Monat, vielfach sogar über einen Zeitraum von ≧ 3 Monaten. Die Polymerisatvolumenkonzentration wäßriger Polymerisatdispersionen beträgt in der Regel 10 bis 70 Vol.-%, bezogen auf das Gesamtvolumen der wäßrigen Polymerisatdispersion.

Ebenso wie Polymerisatlösungen beim Verdampfen des Lösungsmittels, weisen wäßrige Polymerisatdispersionen beim Verdampfen des wäßrigen Dispergiermediums die Eigenschaft auf, Polymerisatfilme zu bilden, weshalb wäßrige Polymerisatdispersionen in vielfacher Weise als Bindemittel, z.B. für Anstrichfarben oder Massen zum Beschichten von Leder, Anwendung finden.

Eine weitere bemerkenswerte Eigenschaft wäßriger Polymerisatdispersionen ist ihre bei gleichem Polymerisatgehalt im Vergleich zu Polymerisatlösungen geringere dynamische Viskosität. Mit Vorteil werden daher wäßrige Polymerisatdispersionen von Polymerisaten, die einen erhöhten Anteil an hydrophilen Monomeren wie z.B. (Meth)acrylsäure einpolymerisiert enthalten, als Verdickerdispersionen eingesetzt. D.h. das Polymerisat wird in saurem wäßrigem Medium in einer eine relativ geringe dynamische Viskosität bewirkenden, dispersen Verteilung erzeugt. Beim Anwender können dann diese niederviskosen wäßrigen Polymerisatdispersionen durch Erhöhung des pH-Wertes in hochviskose verdickend wirkende wäßrige Lösungen überführt werden (vgl. z.B. DE-PS 1164095, DE-PS 1264945, DE-PS 1258721, DE-PS 1546315 und DE-PS 1265752).

Prinzipiell unterscheidet der Fachmann wäßrige Polymerisatdispersionen in wäßrige Sekundär- und in wäßrige Primärdispersionen. Die wäßrigen Sekundärdispersionen sind solche, bei deren Herstellung das Polymerisat außerhalb des wäßrigen Dispergiermediums erzeugt wird, z.B in Lösung eines geeigneten nicht wäßrigen Lösungsmittels befindlich. Diese Lösung wird anschließend in das wäßrige Dispergiermedium überführt und unter Dispergierung das Lösungsmittel , in der Regel destillativ, abgetrennt. Demgegenüber handelt es sich bei wäßrigen Primärdispersionen um solche, bei denen das Polymerisat aus wenigstens eine ethylenisch ungesättigte Gruppe aufweisenden Monomeren nach der Methode der radikalischen wäßrigen Emulsionspolymerisation unmittelbar in disperser Verteilung befindlich im wäßrigen Dispergiermedium selbst erzeugt wird.

Letztere Methode ist vielfach vorbeschrieben und dem Fachmann daher hinreichend bekannt (vgl. z.B. Encyclopedia of Polymer Science and Engineering, Vol. 8, S. 659ff (1987); D.C. Blackley, in High Polymer Latices, Vol. 1, S. 35ff (1966); H. Warson, The Applications of Synthetic Resin Emulsions, Seite 246ff, Kapitel 5 (1972); D. Diederich, Chemie in unserer Zeit 24, S. 135 bis 142 (1990); Emulsion Polymerization, Interscience Publishers, New York (1965); DE-A 40 03 422 und Dispersionen synthetischer Hochpolymere, F. Hölscher, Springer Verlag, Berlin (1969)).

Signifikanter Vorteil der radikalischen wäßrigen Emulsionspolymerisation, im Unterschied zu den anderen radikalischen Polymerisationsverfahren, ist, daß sie zu Polymerisaten mit besonders hohem Molekulargewicht führt (vgl. z.B. High Polymers, Vol. IX, Emulsion Polymerization, Interscience Publishers, Inc., New York (1965), S. 15/16), was beispielsweise bei Verdickerdispersionen von Vorteil ist, da bei gegebener Monomerenzusammensetzung ein erhöhtes Molekulargewicht in der Regel die verdickende Wirkung fördert.

Nachteilig an der bekannten Methode der radikalischen wäßrigen Emulsionspolymerisation von Gemischen aus wenigstens eine ethylenisch ungesättigte Gruppe aufweisenden Monomeren ist jedoch, daß mit zunehmendem Anteil an hydrophilen Monomeren (Monomere mit erhöhter Wasserlöslichkeit) im zu polymerisierenden Monomerengemisch das resultierende Molekulargewicht in seiner Höhe nicht mehr zu befriedigen vermag. Ein weiterer Nachteil ist darin begründet, daß mit zunehmendem Anteil an hydrophilen Monomeren im zu polymerisierenden Monomerengemisch das Verfahren der radikalischen wäßrigen Emulsionspolymerisation vielfach nicht mehr in vollem Umfang erfolgreich durchführbar ist, d.h. erhalten wird häufig eine wäßrige Polymerisatdispersion mit erhöhtem Koagulatgehalt bzw. anstelle einer stabilen wäßrigen Polymerisatdispersion ein koagulierendes System.

Die Aufgabe der vorliegenden Erfindung bestand daher darin, wäßrige Polymerisatdispersionen von Polymerisaten, die einen erhöhten Anteil an hydrophilen Monomeren einpolymerisiert enthalten, zur Verfügung zu stellen, die ein erhöhtes Molekulargewicht sowie eine erhöhte Stabilität aufweisen. Ferner bestand die Aufgabe der vorliegenden Erfindung darin, Verfahren zur Herstellung solcher wäßrigen Polymerisatdispersionen zu Verfügung zu stellen.

Demgemäß wurden die eingangs definierten wäßrigen Polymerisatdispersionen gefunden.

Dabei konnte von der EP-A 190 892 als nächstliegendem Stand der Technik ausgegangen werden. Aus dieser Offenlegungsschrift war vorbekannt, daß Gemische aus wenigstens eine ethylenisch ungesättigte Gruppe aufweisenden radikalisch polymerisierbaren Monomeren a), b) und c) in einem wäßrigen Dispergiermedium, das aus Wasser und einem in Wasser eine reduzierte Löslichkeit aufweisenden organischen Lösungsmittel besteht, in befriedigender Weise zu einer wäßrigen Polymerisatdispersion polymerisierbar sind. Aus der EP-A 190 892 war ferner bekannt, daß die dabei resultierenden wäßrigen Polymerisatdispersionen als wäßrige Verdickerdispersionen (pH-Erhöhung bewirkt verdickende Wirkung) mit erhöhter verdickender Wirkung geeignet sind.

Nachteilig an der Lehre der EP-A 190 892 ist jedoch, daß sie ein Beisein von Monomeren c) als unverzichtbar erachtet. Ferner geht aus der EP-A 190 892 nicht hervor, daß, wenn man gemäß der darin gegebenen Lehre verfährt, Dispersionspolymerisate resultieren, die, im Vergleich zu einer Herstellung ohne Beisein des organischen Lösungsmittels, ein erhöhtes Molekulargewicht aufweisen. Vielmehr führt die EP-A 190 892 die erhöhte verdickende Wirkung der gemäß ihrer Lehre erhältlichen Verfahrensprodukte darauf zurück, daß das Beisein des organischen Lösungsmittels eine besonders gleichförmige Einpolymerisation der Monomeren c) bedingt (vgl. S. 6, Zeile 23 der EP-A 190 892 bis S. 7, Zeile 10). In entsprechender Weise wird in der EP-A 190 892 davon ausgegangen, daß eine Polymerisation in Abwesenheit von Monomeren c) durch das Beisein entsprechender organischer Lösungsmittel zu Polymerisaten mit reduzierter Verdickerwirkung führen wurde (S. 7, Zeilen 11 bis 20). Die Bedeutung des Beiseins des organischen Lösungsmittels für die Durchführbarkeit der radikalischen wäßrigen Emulsionspolymerisation überhaupt wird aus der EP-A 190 892 gleichfalls nicht transparent.

Vor diesem Hintergrund überrascht die erfindungsgemäße Lösung der gestellten Aufgabe. Unter dem Begriff "tensidische Monomere" werden hier amphiphile grenzflächenaktive Substanzen verstanden, die wenigstens eine ethylenisch ungesättigte Gruppe aufweisen und durch Anlagerung von Alkylenoxid, insbesondere Ethylenoxid, an geeignete wenigstens eine ethylenisch ungesättigte Gruppe aufweisende Verbindungen mit beweglichen Protonen (acidem Wasserstoff im Sinne Brönsteds) erhältlich sind. Solchermaßen bewegliche Protonen weisen beispielsweise Hydroxylgruppen oder Carboxylgruppen auf. Vorgenannte tensidische Monomere lassen sich auch als Kondensationsprodukte von Oligoalkylenglykoläthern und bewegliche Protonen enthaltenden, wenigstens eine ethylenisch ungesättigte Bindung aufweisenden, Verbindungen auffassen.

Vorzugsweise beträgt die Löslichkeit des erfindungsgemäß mitzuverwendenden organischen Lösungsmittels in Wasser bei der gewählten Polymerisationstemperatur und dem gewählten Polymerisationsdruck, bezogen auf die Wassermenge, ≦ 8 oder ≦ 6 oder ≦ 4 oder ≦ 1 Gew.-%.

Bezogen auf die Gesamtmenge der zu polymerisierenden Monomeren beträgt die Menge an erfindungsgemäß mitzuverwendendem organischem Lösungsmittel in der Regel 2 bis 500, häufig 10 bis 400, meist 25 bis 200 Gew.-%. Der Wasseranteil des wäßrigen Dispergiermediums beträgt erfindungsgemäß, in entsprechender Weise bezogen, in der Regel 40 bis 900 Gew.-%. Bezogen auf die Menge des gesamten Dispergiermediums liegt der Lösungsmittelanteil in der Regel bei wenigstens 5, üblicherweise jedoch bei ≦ 50 und bevorzugt bei ≦ 20 Gew.-%.

Beispiele für geeignete erfindungsgemäß mitzuverwendende organische Lösungsmittel sind kettenförmige (verzweigte oder unverzweigte) oder cyclische gesättigte Kohlenwasserstoffe wie Propan, Butan, Pentan, Hexan, Heptan, Octan, Cyclopentan, Cyclohexan, Methylcyclohexan und Paraffinöle, aromatische Kohlenwasserstoffe wie Benzol, Toluol, Xylol und Isopropylbenzol, halogenierte Kohlenwasserstoffe wie Methylenchlorid, Chlorbenzol oder 1,1,1-Trichlorethan, Dialkylether wie tert.-Butylmethylether oder Isobutylmethylether, Ester aus C₁- bis C₂₀-Alkancarbonsäuren und einwertigen C₁- bis C₂₀-Alkanolen wie Ameisensäuremethylester, Ameisensäureethylester, Ameisensäurepropylester, Essigsäuremethylester, Essigsäureethylester, Essigsäurepropylester, Essigsäurebutylester, Essigsäureamylester, Propionsäuremethylester, Ethylhexansäureethylhexylester, Isopropylpalmitat oder Isopropylmyristat, Ketone, die ≧ 5 Kohlenstoffatome aufweisen wie Diethylketon, einwertige Alkanole, die > 3 Kohlenstoffatome aufweisen wie n-Butanol, n-Pentanol, iso-Pentanol, n-Hexanol, Cyclohexanol, iso-Octanol, n-Octanol, iso-Decanol oder n-Dodecanol. Selbstverständlich können auch Mischungen der vorgenannten Lösungsmittel angewendet werden.

Nach beendeter erfindungsgemäßer radikalischer wäßriger Emulsionspolymerisation wird das mitverwendete organische Lösungsmittel aus der resultierenden wäßrigen Polymerisatdispersion vorzugsweise abgetrennt. Bevorzugt werden als organische Lösungsmittel daher solche verwendet, deren Siedepunkt bei einem Druck von 1 atm ≦ 150°C, mit besonderem Vorteil ≦ 100°C beträgt. Geeignete Verfahren der Lösungsmittelabtrennung sind konventionelles Destillieren, Wasserdampfdestillieren, Strippverfahren, Adsorptionsverfahren, Ultrafiltration oder Dialyse. Der Begriff Lösungsmittel impliziert, daß es sich um chemische Verbindungen handelt, die sich bezüglich der radikalischen wäßrigen Emulsionspolymerisation im wesentlichen inert verhalten.

Monomere a) sind solche, deren Löslichkeit in Wasser bei der gewählten Polymerisationstemperatur und dem gewählten Polymerisationsdruck ≧ 5 Gew.-%, bezogen auf die Wassermenge, beträgt. D.h. rührt man bei der gewählten Polymerisationstemperatur und dem gewählten Polymerisationsdruck in entsprechender Weise 5 Gew.-% eines Monomeren a) in Wasser ein, so bildet sich eine optisch homogene transparente Phase aus, deren optisch homogene Wirkung nicht auf identischen Berechnungsindices von Monomeren und Wasser beruht, sondern eine Konsequenz der innigen Vermischung der beiden Substanzen ist.

Als Monomere a) kommen beispielsweise in Betracht α,β-monoethylenisch ungesättigte Carbonsäuren wie Acrylsäure, Methacrylsäure, Itaconsäure, Crotonsäure, Fumarsäure, Maleinsäure, Halbester der Malein- oder Fumarsäure wie Maleinsäuremonomethylester, Fumarsäuremonomethylester, Maleinsäuremonoethylester, Fumarsäuremonoethylester, Maleinsäuremonobutylester und Fumarsäuremonobutylester, monoethylenisch ungesättigte Verbindungen, die wenigstens eine Phosphonsäuregruppe oder wenigstens eine Sulfonsäuregruppe aufweisen wie Vinylphosphonsäure, Natrium-vinylsulfonat, Natrium-styrolsulfonat oder Acrylamidopropansulfonsäure, monoethylenisch ungesättigte Verbindungen, die wenigstens eine Sulfatestergruppe aufweisen wie Kalium-Sulfatopropylmethacrylat oder Ammoniumsulphatoethylmethacrylat, Amide α,β-monoethylenisch ungesättigter Carbonsäuren und deren Derivate wie Acrylamid, Methacrylamid, N,N-Dimethylacrylamid, 3-Acrylamido-3-methyl-buttersäure, N,N-Dimethylaminopropylacrylamid, N-Methylol(meth)acrylamid, N,N-Dimethyl-N-methacrylamidopropyl-N-(3-sulfopropyl)ammonium-betain oder 10-Acrylamidoundecansäure, Hydroxyester aus Acryl- oder Methacrylsäure und mehrwertigen Alkoholen wie Hydroxyethylacrylat, Hydroxyethylmethacrylat, Hydroxypropylacrylat, Hydroxypropylmethacrylat oder Butandiolmonoacrylat, aber auch Monomere wie Dimethylaminoethylacrylat, Dimethylaminoethylmethacrylat, Diethylaminoethylacrylat, Diethylaminoethylmethacrylat, quaternierte Ammonium(meth)acrylate wie N-Trimethyl- oder N-Triethylammoniumethylacrylat sowie N-Trimethyl- oder N-Triethylammoniummethylmethacrylat, N-Vinylpyrrolidon, N-Vinylcaprolactam, N-Vinylimidazol, N-C₁-C₁₀-Alkyl-N'-vinylimidazolium-Verbindungen wie N-Methyl-, N-Ethyl- oder N-Butyl-N'-vinylimidazolium-chlorid, -bromid oder -methosulfat, 1-Vinyl-2-methylvinylimidazol, 4- und 2-Vinylpyridin oder N-Vinylformamid.

Monomere a), die saure oder basische Gruppen aufweisen, können auch in Form ihrer durch Neutralisation mit geeigneten Säuren bzw. Basen erzeugten Salze verwendet werden. Geeignete Basen zum Zwecke der Neutralisation sind z.B. Alkalimetallhydroxide, Ammoniak oder organische Amine. Geeignete neutralisierende Säuren sind Mineralsäuren wie Schwefelsäure, Salzsäure oder Phosphorsäure sowie 1- bis 4 C-Atome aufweisende organische Säuren wie z.B. Ameisensäure, Essigsäure, Zitronensäure oder Weinsäure.

Bezogen auf die Gesamtmenge der zu polymerisierenden Monomeren beläuft sich der Anteil der Monomeren a) mit Vorteil auf wenigstens 40, häufig wenigstens 50 Gew.-%. Er liegt jedoch üblicherweise bei ≦ 80, häufig ≦ 70 Gew.-%.

Bevorzugte Monomere a) sind Acryl- und Methacrylsäure. Mit Vorteil bestehen wenigstens 50 Gew.-% der Gesamtmenge der Monomeren a) aus wenigstens einem der beiden vorgenannten Monomeren. Besonders bevorzugt bestehen die Monomeren a) ausschließlich aus Acryl- und/oder Methacrylsäure.

Als Monomere b) kommen in Betracht Styrol und seine Derivate wie α-Methylstyrol, p-Methylstyrol, p-Chlormethylstyrol, p-Butylstyrol, p-Ethylstyrol oder p-Chlorstyrol, halogenierte monoethylenisch ungesättigte Verbindungen wie Vinylchlorid, Vinylidenchlorid oder Vinylidenfluorid, Vinylester von geradkettigen oder verzweigten 2 bis 30, insbesondere 2 bis 10 C-Atome aufweisenden Alkancarbonsäuren wie Vinylacetat, Vinylpropionat, Vinyllaurat, Neooctansäurevinylester, Neononansäurevinylester, Neodecansäurevinylester, konjugierte mehrfach ungesättigte Verbindungen wie Butadien oder Isopren, Vinylalkylether, deren Alkylrest 1 bis 30 C-Atome aufweist wie Vinyloctadecylether, aber auch Acrylnitril, Methacrylnitril, 3 bis 30 C-Atome aufweisende 1-Alkene, N-Alkylacryl- oder N-Alkylmethacrylamide, deren Alkylgruppen 4 bis 30 C-Atome aufweisen wie N-tert.-Butylacrylamid, N-tert.-Octylacrylamid oder N-Undecylmethacrylamid, Ester aus Acryl- oder Methacrylsäure und 1 bis 25 C-Atome aufweisenden Alkanolen wie Methylacrylat, Ethylacrylat, n-Butylacrylat, iso-Butylacrylat, tert.-Butylacrylat, 2-Ethylhexylacrylat, Laurylacrylat, iso-Bornylacrylat, Stearylacrylat und die entsprechenden Methacrylester, aber auch Phenoxyethylacrylat, Tetrahydrofurfurylacrylat, Tetrahydrofurfurylmethacrylat oder Perfluorethylacrylat.

Bevorzugte Monomere b) sind Styrol, Vinylester von 2 bis 30 C-Atome aufweisenden Alkancarbonsäuren, sowie Alkylacrylate und -methacrylate, die 1 bis 10 C-Atome in der Alkylgruppe aufweisen oder Gemische aus diesen Monomeren. Ganz allgemein sind solche Monomere b) bevorzugt, deren Löslichkeit in Wasser bei Polymerisationsdruck und Polymerisationstemperatur gleich oder geringer als die entsprechende Löslichkeit von Methylacrylat, vorzugsweise gleich oder geringer als die entsprechende Löslichkeit von Ethylacrylat ist.

Monomere, die üblicherweise die innere Festigkeit der Verfilmungen der wäßrigen Polymerisatdispersionen erhöhen, sogenannte vernetzend wirkende Monomere, können sowohl Monomere a) oder Monomere b) sein. Üblicherweise weisen solche Monomeren wenigstens eine Epoxy-, Hydroxy-, N-Methylol-, Carbonylgruppe oder wenigstens zwei nicht konjugierte ethylenisch ungesättigte Doppelbindungen auf. Bezogen auf die Gesamtmenge der zu polymerisierenden Monomeren werden diese Monomeren üblicherweise in einer Menge von ≦ 10 Gew.-%, vorzugsweise ≦ 5 Gew.-% einpolymerisiert.

Beispiele für solche Monomeren sind Divinylbenzol, Divinylethylenharnstoff, Diallylweinsäurediamid, Methylenbisacrylamid, Ester aus Acryl- oder Methacrylsäure und mehrwertigen Alkoholen wie Ethylenglykol, 1,4-Butandiol, Trimethylolpropan, Pentaerythrit, Neopentylglykol, Bisphenol-A, Glycerin oder Propandiol mit wenigstens zwei Estereinheiten pro Molekül, Allylester der Acryl- oder Methacrylsäure, Trivinylcyclohexan, Triallyltriazintrion, Allylether von Trimethylolpropan, Pentaerythrit und Saccharose mit mindestens zwei Allylethereinheiten pro Molekül, Dihydrodicyclopentadienylacrylat, Dihydrodicyclopentadienylmethacrylat, N-Allylmethacrylamid, N,N-Diallylweinsäurediamid oder Diallylphthalat. Besonders bevorzugt sind Divinylbenzol, Allylester der Acryl- oder Methacrylsäure, 1,4-Butandioldiacrylat oder 1,4-Butandioldimethacrylat.

Normalerweise ist beim erfindungsgemäßen verfahren die Löslichkeit der beteiligten Monomeren b) so beschaffen, daß die am erfindungsgemäßen Verfahren beteiligte Gesamtmenge an Monomeren b) im wäßrigen Anteil des Dispergiermediums bei der gewählten Polymerisationstemperatur und dem gewählten Polymerisationsdruck nicht vollständig löslich ist.

Als radikalische Polymerisationsinitiatoren kommen für das erfindungsgemäße Verfahren alle diejenigen in Betracht, die in der Lage sind, unter Einwirkung von Licht oder Wärme radikalische wäßrige Emulsionspolymerisationen auszulösen. Es kann sich dabei sowohl um Peroxide als auch um Azoverbindungen handeln. Selbstverständlich kommen auch Redoxinitiatorsysteme in Betracht. Sie können in Wasser sowohl gut als auch wenig löslich sein. Vorzugsweise werden Peroxodischwefelsäure und/oder deren Alkalimetallsalze und/oder ihr Ammoniumsalz als radikalische Starter verwendet. Geeignet ist auch Wasserstoffperoxid oder tert.-Butylhydroperoxid. Die Einsatzmenge an radikalischen Polymerisationsinitiatoren beträgt, bezogen auf die Gesamtmenge der zu polymerisierenden Monomeren, in der Regel 0,1 bis 5 Gew.-%. Selbstverständlich kann die erfindungsgemäße radikalische wäßrige Emulsionspolymerisation auch durch ionisierende Strahlung initiiert werden.

Üblicherweise werden im Rahmen der erfindungsgemäßen radikalischen wäßrigen Emulsionspolymerisation Dispergiermittel mitverwendet, die die Stabilität der erzeugten wäßrigen Polymerisatdispersion gewährleisten. Als solche kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden.

Vorzugsweise werden als Dispergiermittel ausschließlich Emulgatoren eingesetzt, deren relatives Molekulargewicht vorzugsweise < 1000 beträgt. Sie können sowohl anionischer, kationischer oder nichtionischer Natur sein. Selbstverständlich müssen im Fall der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens miteinander unverträglich sind. Gebräuchliche Emulgatoren sind Alkalimetall-, Ammonium- und Aminsalze von Fettsäuren, ethoxylierte Mono-, Di- und Tri-Alkylphenole (EO-Grad: 3 bis 100, Alkylrest: C₄ bis C₁₂), ethoxylierte Fettalkohole (EO-Grad: 3 bis 100, Alkylrest: C₈ bis C₁₈), sowie Alkali- und Ammoniumsalze von Alkylsulfaten (Alkylrest: C₈ bis C₁₆), von Schwefelsäurehalbestern ethoxylierter Alkanole (EO-Grad: 1 bis 70, Alkylrest: C₁₂ bis C₁₈) und ethoxylierter Alkylphenole (EO-Grad: 3 bis 100, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren wie Sulfobernsteinsäureester finden sich in Houben-Weyl, Methoden der organischen Chemie, Band XIV/1, Makromolekulare Stoffe, Georg-Thieme-Verlag, Stuttgart, 1961, Seiten 192 bis 208, oder in R. Hensch, Ullmann's Encyclopedia of Industrial Chemistry, 5. Auflage, 1987, Vol. A9, S. 297 bis 339, bei E.W. Flick, Industrial Surfactants, Noyes Publication, Park Ridage, 1988, oder bei M.R. Porter, Handbook of Surfactants, Chapmann & Hall, New York 1991.

Insbesondere eignen sich auch solche Emulgatoren, deren HLB-Wert > 8 beträgt. HLB steht als Abkürzung für "Hydrophile-Lipophile-Balance" des Emulgators und beinhaltet ein gegeneinander Abwägen der Wirkung der hydrophilen und der lipophilen Gruppen des Emulgators. Eine Definition des Begriffes findet sich beispielsweise in "Das Atlas HLB-System", Atlas Chemie GmbH, EC 10 G July 1971, und in Classification of Surface Active Agents by "HLB", W.C. Griffin, Journal of the Society of Cosmetic Chemists, Band 1, 311 (1949).

In der Regel beträgt die Menge an verwendetem Dispergiermittel 0,5 bis 20, vorzugsweise 0,5 bis 10, besonders bevorzugt 0,5 bis 5 Gew.-%, bezogen auf die radikalisch zu polymerisierenden Monomeren. Die erfindungsgemäßen unmittelbaren Verfahrensprodukte umfassen aber auch wäßrige Polymerisatdispersionen von selbstemulgierenden Polymerisaten, d.h. von Polymerisaten, die ionische Gruppen aufweisen, die aufgrund der Abstoßung von Ladungen gleichen Vorzeichens die Stabilisierung zu bewirken vermögen. Bevorzugt weisen die erfindungsgemäßen unmittelbaren Verfahrensprodukte anionische Stabilisierung (insbesondere anionische Dispergiermittel) auf. Es können aber auch kationenaktive Verbindungen eingesetzt werden, wie beispielsweise Fettamine, quartäre Ammoniumverbindungen oder quaternisierte Pyridine, Morpholine oder Imidazoline.

Das erfindungsgemäße Verfahren kann sowohl bei reduziertem Druck, bei Normaldruck (1 atm) als auch bei erhöhtem Druck durchgeführt werden. In typischer Weise beträgt der Druck bei der erfindungsgemäßen radikalischen wäßrigen Emulsionspolymerisation 0,8 bis 15 atm. Vorzugsweise wird bei Normaldruck polymerisiert.

Mit Vorteil wird die erfindungsgemäße radikalische wäßrige Emulsionspolymerisation unter Inertgasatmosphäre und unter Rühren durchgeführt. Die Polymerisationstemperatur beträgt in der Regel 0 bis 160, häufig 40 bis 160 und vorzugsweise 50 bis 120°.

Bei Bedarf kann das Molekulargewicht der erfindungsgemäßen Emulsionspolymerisate durch das Beisein von das Molekulargewicht regelnden Verbindungen während der erfindungsgemäßen radikalischen wäßrigen Emulsionspolymerisation verringert werden. Geeignete Molekulargewichtsregler sind beispielsweise Halogenverbindungen wie Tetrachlormethan, Chloroform, Bromtrichlormethan, Allylverbindungen wie Allylalkohol oder 2,5-Diphenyl-1-hexen, Aldehyde, Ameisensäure oder Ameisensäureester. Besonders geeignete Molekulargewichtsregler sind Schwefel in chemisch gebundener Form enthaltende Verbindungen wie anorganische Hydrogensulfite, Sulfite, Disulfite und Dithionite oder organische Sulfide, Disulfide, Polysulfide, Sulfoxide, Sulfone und Mercaptoverbindungen. Bevorzugt eingesetzt werden Mercaptoalkohole, Mercaptocarbonsäuren und Mercaptoalkene mit 2 bis 30 Kohlenstoffatomen im Molekül, wie 2-Mercaptoethanol, 1,3-Mercaptopropanol, 3-Mercaptopropan-1,2-diol, 1,4-Mercaptobutanol, Cystein, Mercaptoessigsäure, 3-Mercaptopropionsäure, Mercaptobernsteinsäure, n-Butylmercaptan, n-Hexylmercaptan, n-Dodecylmercaptan oder tert.-Dodecylmercaptan. Falls das Molekulargewicht regelnde Verbindungen mitverwendet werden, werden sie in Mengen von 0,1 bis 15, vorzugsweise von 0,1 bis 5 Gew.-%, bezogen auf die zu polymerisierenden Monomeren, angewendet.

Die erfindungsgemäß erhältlichen wäßrigen Copolymerisatdispersionen können im Anschluß an ihre eigentliche Herstellung weiteren Verfahrensschritten unterworfen werden, z.B. um den Gehalt unerwünschter Verunreinigungen zu reduzieren. Solche Verfahrensschritte können beispielsweise Nachpolymerisationsverfahren, Wasserdampfbehandlungen, teilweises Abdestillieren der wäßrigen Phase oder Strippverfahren sein. Sie können aber auch anderen Behandlungsschritten wie Filter-, Trocken- oder Koagulierverfahren unterworfen werden.

Selbstverständlich können den erfindungsgemäß erhältlichen wäßrigen Copolymerisatdispersionen an sich übliche Hilfsmittel wie Komplexbildner, Schaumdämpfer, Konservierungsmittel, Korrosionsinhibitoren, Radikalfänger, Oxidationsschutzmittel, Säuren oder Basen zugesetzt werden.

Die erfindungsgemäßen wäßrigen Polymerisatdispersionen sind z.B. dadurch erhältlich, daß alle Bestandteile des Polymerisationsansatzes ins Polymerisationsgefäß vorgelegt werden und anschließend auf die Polymerisationstemperatur erwärmt wird. Es können jedoch auch verschiedene oder alle Bestandteile im Verlauf der Umsetzung, innerhalb von gegebenenfalls voneinander verschiedenen Zeiträumen, teilweise oder vollständig dem Polymerisationsgefäß zugeführt werden (Zulaufverfahren). Die Zufuhr kann über räumlich getrennte Zuläufe aber auch gegebenenfalls räumlich vereint erfolgen.

Mit Vorteil sind die erfindungsgemäßen wäßrigen Polymerisatdispersionen nach dem Zulaufverfahren dadurch erhältlich, daß man die Gesamtmenge an radikalischem Polymerisationsinitiator in Wasser vorlegt, die Vorlage auf die Polymerisationstemperatur erwärmt und anschließend unter Aufrechterhaltung der Polymerisation(stemperatur) eine die zu polymerisierenden Monomeren, das organische Lösungsmittel, Wasser und das gesamte Dispergiermittel enthaltende wäßrige Emulsion kontinuierlich, nach Maßgabe des Verbrauchs, ins Polymerisationsgefäß zulaufen läßt. Selbstverständlich kann man aber auch z.B. den Polymerisationsinitiator, z.B. als wäßrige Lösung, über einen räumlich getrennten Zulauf synchron mit den Monomeren zulaufen lassen. Auch kann ein Teil des Dispergiermittels ins Polymerisationsgefäß vorgelegt werden.

Erfindungswesentlich ist nur, daß die Polymerisation wenigstens eines Teils der zu polymerisierenden Monomeren in einem Dispergiermedium erfolgt, das neben einer wäßrigen noch eine organische Lösungsmittelphase umfaßt. Vorzugsweise erfolgt die Polymerisation von wenigstens 50 Gew.-% oder wenigstens 75 Gew.-% oder von 100 Gew.-% der Gesamtmenge der zu polymerisierenden Monomeren in einem Dispergiermedium, das aus einer wäßrigen und aus einer organischen Lösungsmittelphase besteht.

Die erfindungsgemäßen wäßrigen Polymerisatdispersionen eignen sich generell zum Verdicken wäßriger Systeme, insbesondere zum Verdicken von Öl-in-Wasser-Emulsionen wie sie beispielsweise für kosmetische Zwecke Anwendung finden. Als Öle kommen dabei insbesondere Paraffinöle, Esteröle (z.B. Isopropylmyristat) oder natürliche Öle wie Sonnenblumenöl, Erdnußöl oder Jojobaöl in Betracht.

Üblicherweise enthalten solche Öl-in-Wasser-Emulsionen, bezogen auf ihre Gesamtmasse, 0,2 bis 10 Gew.-% an erfindungsgemäßem wäßrigem Dispersionspolymerisat zugesetzt.

### Beispiele

Herstellung verschiedener erfindungsgemäßer wäßriger Polymerisatdispersionen Di sowie von Vergleichsdispersionen VDi
- D1:: In einem Polymerisationsgefäß wurden 485 g Wasser und 0,75 g Natriumperoxodisulfat vorgelegt und unter Rühren und unter leichtem Stickstoffstrom auf 80°C erwärmt. Anschließend wurde dem Polymerisationsgefäß unter Aufrechterhaltung der 80°C ein gerührter Zulauf aus 114 g Wasser, 5,5 g des Natriumsalzes des Schwefelsäurehalbesters von ethoxyliertem Laurylalkohol (Ethoxylierungsgrad: 2) = Emulgator 1, 105 g Methacrylsäure, 30 g Ethylacrylat und 75 g Essigsäureethylester innerhalb von 3 h kontinuierlich zugeführt. Nach beendeter Zufuhr wurde noch 3 h unter Aufrechterhaltung der 80°C gerührt. Anschließend wurde der Essigsäureethylester destillativ abgetrennt. Es wurde eine wäßrige Polymerisatdispersion erhalten, die einen Feststoffgehalt von 21 Gew.-% aufwies. Der gewichtsmittlere Durchmesser der dispergierten Polymerisatteilchen betrug 357 nm (Streulichtmessung).
- VD1:: Wie D1, jedoch ohne Zusatz von Essigsäureethylester. Der Polymerisationsansatz koagulierte während der Polymerisation.
- D2:: In einem Polymerisationsgefäß wurden 485 g Wasser und 0,75 g Natriumperoxodisulfat vorgelegt und unter Rühren und leichtem Stickstoffstrom auf 80°C erwärmt. Anschließend wurde dem Polymerisationsgefäß unter Aufrechterhaltung der 80°C ein gerührter Zulauf aus 114 g Wasser, 5,5 g Emulgator 1, 120 g Methacrylsäure, 30 g Ethylacrylat und 1,5 g Natrium-styrolsulfonat und 75 g Essigsäureethylester innerhalb von 3 h kontinuierlich zugeführt. Nach beendeter Zufuhr wurde noch 3 h unter Aufrechterhaltung der 80°C gerührt. Anschließend wurde der Essigsäureethylester destillativ abgetrennt. Es wurde eine wäßrige Polymerisatdispersion erhalten, die einen Feststoffgehalt von 21,9 Gew.-% aufwies. Der gewichtsmittlere Durchmesser der dispergierten Polymerisatteilchen betrug 377 nm (Streulichtmessung).
- VD2:: Wie D2, jedoch ohne Zusatz von Essigsäureethylester. Der Polymerisationsansatz koagulierte während der Polymerisation.
- D3:: In einem Polymerisationsgefäß wurden 450 g Wasser und 0,80 g Natriumperoxodisulfat vorgelegt und unter Rühren und leichtem Stickstoffstrom auf 80°C erwärmt. Anschließend wurde dem Polymerisationsgefäß unter Aufrechterhaltung der 80°C ein gerührter Zulauf aus 150 g Wasser, 5 g Emulgator 1, 75 g Methacrylsäure, 75 g Styrol und 75 g Essigsäureethylester innerhalb von 3 h kontinuierlich zugeführt. Nach beendeter Zufuhr wurde noch 3 h unter Aufrechterhaltung der 80°C gerührt. Anschließend wurde der Essigsäureethylester destillativ abgetrennt. Danach wurde die wäßrige Polymerisatdispersion über einem Polyamidfilternetz (Maschenweite: 120 µ) filtriert. Es wurde eine wäßrige Polymerisatdispersion erhalten, die einen Feststoffgehalt von 21,9 Gew.-% und auch nach einem Monat Lagerung keine Sedimentationserscheinungen aufwies. Der gewichtsmittlere Durchmesser der dispergierten Polymerisatteilchen betrug 84 nm (Streulichtmessung). Der K-Wert des dispergierten Polymerisats (23°C, 0,1 gew.-%ige Lösung in Tetrahydrofuran) betrug 66,3.
Der K-Wert ist eine relative Viskositätszahl, die in Analogie zur DIN 53 726 bestimmt wird. Er beinhaltet die Fließgeschwindigkeit eines reinen Lösungsmittels relativ zu einer Lösung des Polymerisats in diesem Lösungsmittel und charakterisiert das mittlere Molekulargewicht des Polymerisats. Ein hoher K-Wert entspricht dabei einem hohen mittleren Molekulargewicht (vgl. Cellulosechemie, Vol. 13 (1932), S. 58 bis 64, und Kirk-Othmer, Encyclopedia of Chemical Technology, Vol. 23, S. 967 bis 968).
- VD3:: Wie D3, jedoch ohne Zusatz von Essigsäureethylester. Der Polymerisationsansatz koagulierte während der Polymerisation partiell. Der nicht koagulierte Anteil bestand aus einer grobteiligen Suspension, die rasch sedimentierte.
- D4:: In einem Polymerisationsgefäß wurden 450 g Wasser und 0,75 g Natriumperoxodisulfat vorgelegt und unter Rühren und leichtem Stickstoffstrom auf 80°C erwärmt. Anschließend wurde dem Polymerisationsgefäß unter Aufrechterhaltung der 80°C ein gerührter Zulauf aus 150 g Wasser, 5 g Emulgator 1, 90 g Methacrylsäure, 60 g Ethylacrylat und 75 g Essigsäureethylester innerhalb von 3 h kontinuierlich zugeführt. Nach beendeter Zufuhr wurde noch 3 h unter Aufrechterhaltung der 80°C gerührt. Anschließend wurde der Essigsäureethylester destillativ abgetrennt. Es wurde eine wäßrige Polymerisatdispersion erhalten, die einen Feststoffgehalt von 21 Gew.-% aufwies. Der gewichtsmittlere Durchmesser der dispergierten Polymerisatteilchen betrug 266 nm (Streulichtmessung).
Der K-Wert des dispergierten Polymerisats (23°C, 1 gew.-%ige Lösung in Tetrahydrofuran) betrug 22,3.
- VD4:: Wie D4, jedoch ohne Zusatz von Essigsäureethylester. Der Polymerisationsansatz vergelte.

## Patentansprüche

1. Wäßrige Polymerisatdispersion, dadurch erhältlich, daß man ein Gemisch aus wenigstens eine ethylenisch ungesättigte Gruppe aufweisenden radikalisch polymerisierbaren Monomeren nach der Methode der radikalischen wäßrigen Emulsionspolymerisation mit der Maßgabe polymerisiert, daß
a) das Monomerengemisch zu 30 bis 90 Gew.-%, bezogen auf das Gemisch, aus Monomeren besteht, deren Löslichkeit in Wasser bei der gewählten Polymerisationstemperatur und dem gewählten Polymerisationsdruck ≧ 5 Gew.-%, bezogen auf die Wassermenge, beträgt (Monomere a),
b) das Monomerengemisch zu 10 bis 70 Gew.-%, bezogen auf das Gemisch, aus Monomeren besteht, deren Löslichkeit in Wasser bei der gewählten Polymerisationstemperatur und dem gewählten Polymerisationsdruck < 5 Gew.-%, bezogen auf die Wassermenge, beträgt (Monomere b),
c) das Monomerengemisch keine tensidischen Monomeren umfaßt (Monomere c) und
d) wenigstens ein Teil der radikalischen wäßrigen Emulsionspolymerisation in einem Dispergiermedium erfolgt, das neben Wasser aus einem organischen Lösungsmittel besteht, dessen Löslichkeit in Wasser bei der gewählten Polymerisationstemperatur und dem gewählten Polymerisationsdruck, bezogen auf die Wassermenge ≦ 10 Gew.-% beträgt, wobei die Menge des organischen Lösungsmittels so bemessen ist, daß es einerseits das zweifache der Wassermasse nicht übersteigt, andererseits jedoch ausreicht, um neben der wäßrigen Phase die Ausbildung einer Lösungsmittelphase zu bewirken.

2. Wäßrige Polymerisatdispersion nach Anspruch 1, wobei die Löslichkeit des mitzuverwendenden organischen Lösungsmittels in Wasser bei der gewählten Polymerisationstemperatur und dem gewählten Polymerisationsdruck` bezogen auf die Wassermenge, ≦ 6 Gew.-% beträgt.

3. Wäßrige Polymerisatdispersion nach Anspruch 1 oder 2, wobei die Menge des mitzuverwendenden organischen Lösungsmittels` bezogen auf die Gesamtmenge der zu polymerisierenden Monomeren, 2 bis 500 Gew.-% beträgt.

4. Wäßrige Polymerisatdispersion nach Anspruch 1 bis 3, wobei der Anteil des mitzuverwendenden organischen Lösungsmittels, bezogen auf die Menge des gesamten Dispergiermediums, 5 bis 50 Gew.-% beträgt.

5. Wäßrige Polymerisatdispersion nach Anspruch 1 bis 4, wobei das mitzuverwendende organische Lösungsmittel Essigsäureethylester umfaßt.

6. Wäßrige Polymerisatdispersion nach Anspruch 1 bis 5, wobei der Anteil der Monomeren a), bezogen auf die Gesamtmenge der zu polymerisierenden Monomeren, 40 bis 80 Gew.-% beträgt.

7. Wäßrige Polymerisatdispersion nach Anspruch 1 bis 6, wobei die Monomeren a) Acrylsäure, Methacrylsäure oder deren Gemisch umfassen.

8. Wäßrige Polymerisatdispersion nach Anspruch 1 bis 7, wobei die Monomeren a) zu wenigstens 50 Gew.-% aus Acrylsäure, Methacrylsäure oder deren Gemisch bestehen.

9. Wäßrige Polymerisatdispersion nach Anspruch 1 bis 8, wobei die Monomeren b) nur solche Monomeren umfassen, deren Löslichkeit in Wasser bei dem gewählten Polymerisationsdruck und der gewählten Polymerisationstemperatur gleich oder geringer als die entsprechende Löslichkeit von Methylacrylat ist.

10. Wäßrige Polymerisatdispersion nach Anspruch 1 bis 9, wobei die Polymerisationstemperatur 40 bis 160°C beträgt.

11. Wäßrige Polymerisatdispersion nach Anspruch 1 bis 10, wobei das mitzuverwendende organische Lösungsmittel nach beendeter radikalischer wäßriger Emulsionspolymerisation abgetrennt wird.

12. Verwendung wäßriger Polymerisatdispersionen gemäß Anspruch 1 bis 11 zum Verdicken wäßriger Systeme.

13. Verwendung wäßriger Polymerisatdispersionen gemäß Anspruch 1 bis 11 zum Verdicken von Öl-in Wasser-Emulsionen.

14. Öl-in-Wasser-Emulsion, enthaltend eine wäßrige Polymerisatdispersion gemäß Anspruch 1 bis 11.

15. Verfahren zur Herstellung einer wäßrigen Polymerisatdispersion, bei dem man ein Gemisch aus wenigstens eine ethylenisch ungesättigte Gruppe aufweisenden radikalisch polymerisierbaren Monomeren nach der Methode der radikalischen wäßrigen Emulsionspolymerisation polymerisiert, dadurch gekennzeichnet, daß
a) das Monomerengemisch zu 30 bis 90 Gew.-%, bezogen auf das Gemisch, aus Monomeren besteht, deren Löslichkeit in Wasser bei der gewählten Polymerisationstemperatur und dem gewählten Polymerisationsdruck ≧ 5 Gew.-%, bezogen auf die Wassermenge, beträgt (Monomere a),
b) das Monomerengemisch zu 10 bis 70 Gew.-%, bezogen auf das Gemisch, aus Monomeren besteht, deren Löslichkeit in Wasser bei der gewählten Polymerisationstemperatur und dem gewählten Polymerisationsdruck < 5 Gew.-%, bezogen auf die Wassermenge, beträgt (Monomere b),
c) das Monomerengemisch keine tensidischen Monomeren umfaßt (Monomere c) und
d) wenigstens ein Teil der radikalischen wäßrigen Emulsionspolymerisation in einem Dispergiermedium erfolgt, das neben Wasser aus einem organischen Lösungsmittel besteht, dessen Löslichkeit in Wasser bei der gewählten Polymerisationstemperatur und dem gewählten Polymerisationsdruck, bezogen auf die Wassermenge, ≦ 10 Gew.-% beträgt, wobei die Menge des organischen Lösungsmittels so bemessen ist, daß es einerseits das zweifache der Wassermasse nicht übersteigt, andererseits jedoch ausreicht, um neben der wäßrigen Phase die Ausbildung einer Lösungsmittelphase zu bewirken.

16. Verfahren zur Herstellung einer wäßrigen Polymerisatdispersion nach Anspruch 15, dadurch gekennzeichnet, daß man die Gesamtmenge an radikalischem Polymerisationsinitiator in Wasser vorlegt, die Vorlage auf die Polymerisationstemperatur erwärmt und anschließend unter Aufrechterhaltung der Polymerisation eine die zu polymerisierenden Monomeren, das organische Lösungsmittel, Wasser und das gesamte Dispergiermittel enthaltende wäßrige Emulsion kontinuierlich ins Polymerisationsgefäß zulaufen läßt.

17. Verfahren zur Herstellung einer wäßrigen Polymerisatdispersion, dadurch gekennzeichnet, daß man gemäß Anspruch 15 oder 16 verfährt und anschließend das mitverwendete organische Lösungsmittel destillativ abtrennt.

18. Wäßrige Polymerisatdispersion, erhältlich nach einem Verfahren gemäß Anspruch 16 oder 17.

19. Verwendung einer wäßrigen Polymerisatdispersion gemäß Anspruch 18 zum Verdicken wäßriger Systeme.

20. Öl-in-Wasser-Emulsion, enthaltend eine wäßrige Polymerisatdispersion gemäß Anspruch 18.
